# EUROPEAN PATENT SPECIFICATION

(11) **EP 3 466 306 B1**
(45) Date of publication and mention of the grant of the patent: **20.01.2021**
(21) Application number: 18207463.3
(22) Date of filing: 09.05.2016
(51) Int. Cl.: A47J 31/18, A47J 31/40, B65D 83/06, A47G 19/34

(54) **A DISPOSABLE CAPSULE CONTAINING COFFEE POWDER AND A SYSTEM FOR PREPARING TURKISH COFFEE FROM SAID COFFEE POWDER CONTAINED IN SAID DISPOSABLE CAPSULE**
WEGWERFKAPSEL MIT KAFFEEPULVER UND SYSTEM ZUR HERSTELLUNG VON TÜRKISCHEM KAFFEE AUS BESAGTEM KAFFEEPULVER IN BESAGTER WEGWERFKAPSEL
CAPSULE JETABLE CONTENANT DE LA POUDRE DE CAFÉ ET SYSTÈME PERMETTANT DE PRÉPARER DU CAFÉ TURC À PARTIR DE LADITE POUDRE DE CAFÉ CONTENUE DANS LADITE CAPSULE JETABLE

(30) Priority: 08.05.2015 IT PI20150036
(43) Date of publication of application: 10.04.2019
(62) Divisional of application: 16745499.0
(73) Proprietor: Mac Design S.r.l., 55049 Viareggio (LU) (IT)
(72) Inventor: MACCIONI, Roberto, 55049 Viareggio (LU) (IT)
(74) Representative: Celestino, Marco

(56) References cited:
- US-A1- 2015 017 288
- US-A1- 2015 079 240

## Description

### Field of the invention

The present invention relates to a disposable capsule configured to contain coffee powder, and to be used for preparing Turkish coffee by mixing the coffee powder with water.

Moreover, the invention relates to a device for releasing the coffee powder contained in said disposable capsule, in order to bring it into a Turkish coffee preparation container where the mixing with the water occurs.

### Background of the invention

Devices exist for preparing drinks starting from coffee powder, in particular for preparing Turkish coffee, see for instance EP2316312 or DE102006002511A1.

In particular, DE102006002511A1 describes a device for preparing Turkish coffee from coffee powder, comprising a housing configured to receive a disposable capsule filled with the coffee powder, the disposable capsule comprising a hollow body having a first and a second end portion opposite to each other and an outlet mouth for the coffee powder at the first end portion; a frangible membrane arranged at the first end portion, in order to form a first closure member of the disposable capsule that blocks the outlet mouth; a second closure member at the second end portion. The device comprises a means for applying a push on the disposable capsule directed from the second closure member towards the outlet mouth.

This device has the drawback that the second end is pressed, which causes the disposable capsule to collapse. For this reason,
- a part of the coffee powder is not discharged from the disposable capsule;
- the disposable capsule can contain only a relatively small amount of coffee powder, since it must have a curved surface, in order to be collapsed;
- by collapsing, the disposable capsule may break, which in turn causes capsule fragments to be lost, possibly by falling down along with the coffee powder.

Document US2015/0079240A1 provides a cup whose content is discharged by peeling a film, rotating the cup so that the content falls by gravity, and where an end portion of the film is gripped in order to provide an automatic peeling. Document US2015/0017288A1 teaches how to partially open a capsule by cracking and peeling back a top of capsule by mounting a portion of the top on a hinged portion of the above receiving compartment, the hinged portion being rotatably arranged about a hinge at an intermediate portion of the top, and an anvil being arranged with an own end portion at the position of the hinge, in order to maintain a portion of the top attached to the capsule.

### Summary of the invention

It is therefore a feature of the present invention to provide a disposable capsule arranged to contain coffee powder for preparing Turkish coffee, and a device for causing the coffee powder to be released, which solve the technical problems described above.

It is also a feature of the invention to provide such a device that is easy and cheap to be manufactured, that is.

It is also a feature of the present invention avoid any free filling of the disposable capsule by the users and/or by unauthorized people, which could occur out of any control introducing a health risk for the consumers.

These and other objects are achieved by a single-dose disposable capsule according to claim 1.

The break of the joint portion and the separation of the cup portion and of the engagement portion prevent a further reuse of the capsule.

In an exemplary embodiment, the cup portion itself has a rotatable engagement means for engaging with the housing, for instance, pins for engaging with a housing inside within the housing.

The cup portion can be made by injection moulding of a plastic material, or by thermoforming a plastic material. In the latter case, the engagement portion has a stiffening layer stuck opposite to the portion, i.e. to the face, to which the sealing membrane is fixed. This way, the engagement portion is stiff enough to not be deformed under the forces that can act on it during the introduction and the use in the opening device.

According to another aspect of the invention, a system for preparing Turkish coffee according to claim 5 is provided.

In an exemplary embodiment, the device comprises a support configured to receive the disposable capsule, wherein the support is pivotally housed within the box of the device, about its rotation axis.

In an alternative exemplary embodiment, the disposable capsule and the device comprise a mutual engagement means that is rotatably arranged about the rotation axis. In particular, the mutual rotatable engagement means can comprise a couple of pins and a couple of respective housings for said pins, the pins and the housings integral to disposable capsule 90 and to the box of the device, respectively, or vice-versa.

The actuator can be rotatably arranged about a further rotation axis and can comprise a lever manoeuvre portion.

It falls within the scope of the invention also the use of the above-defined system, in an existing apparatus for preparing Turkish coffee, in order to provide an advantageous retrofit solution for this apparatus.

The means for applying a push on the disposable capsule container, on the second closure member, are configured to cause the rotating portion to rotate within the fixed box portion, until it reaches the at least partially open face, so that the rotating portion allows the coffee powder of be discharged from the chamber defined by the fixed box portion and by the rotating portion through the at least partially open face of the fixed box portion of the disposable capsule.

### Brief description of the drawings

The invention will be now shown with the description of an exemplary embodiment thereof, exemplifying but not limitative, with reference to the attached drawings in which:
- Figs. 1-3 are diagrammatical sectional views of a disposable capsule and of a device for opening it according to the invention, when preparing Turkish coffee from a coffee powder contained in the disposable capsule;
- Fig. 4 is a perspective view of a disposable capsule according to a first exemplary embodiment of the invention, in which the rotating portion is in the closed position;
- Fig. 5 is a perspective view of a disposable capsule of the type shown in Fig. 4, comprising an element removable by a thrust, in order to recognize a used disposable capsule;
- Figs. 6 and 7 are perspective views of the fixed box portion and of the rotating portion, respectively, of the disposable capsule of Fig. 5;
- Figs. 8 and 9 are a perspective view and a sectional view, respectively, of the disposable capsule of Fig. 5, with the rotating portion in the open position, after releasing the coffee powder;
- Fig. 10 is a perspective view of a disposable capsule according to a second exemplary embodiment, with the rotating portion in the closed position;
- Fig. 11 is a perspective view of a disposable capsule of the type shown in Fig. 10, equipped with a thrust-removable element for recognizing a used disposable capsule;
- Figs. 12 and 13 are perspective views of the fixed box portion and of the rotating portion, respectively, of the disposable capsule of Fig. 11;
- Figs. 14 and 15 are a perspective view and a sectional view, respectively, of the disposable capsule of Fig. 11, with the rotating portion in the open position, after releasing the coffee powder;
- Fig. 16 is a perspective view of a disposable capsule according to a third exemplary embodiment, with the rotating portion in the closed position;
- Fig. 17 is a perspective view of a disposable capsule of the type shown in Fig. 16, equipped with an element removable by a thrust for recognizing a used disposable capsule;
- Figs. 18 and 19 are perspective views of the fixed box portion and of the rotating portion, respectively, of the disposable capsule of Fig. 17;
- Figs. 20 and 21 are a perspective view and a sectional view, respectively, of the disposable capsule of Fig. 11, with the rotating portion in the open position, after releasing the coffee powder;
- Fig. 22 is a perspective view of a device for opening a disposable capsule according to Figs. 1-21, in order to cause the food powder contained therein to be released;
- Fig. 23 is a perspective view of the rotatable actuator of the device of Fig. 22;
- Fig. 24 is a cross sectional view of the device of Fig. 22 with the disposable capsule according to Figs. 17-21 after releasing the coffee powder, during a step of extracting the disposable capsule from the device;
- Fig. 25 is a perspective view of the device of Fig. 22 with a disposable capsule according to Figs. 1-21 in a configuration before releasing the coffee powder;
- Fig. 26 is a cross sectional view of the device and of the disposable capsule in the configuration of Fig. 25;
- Fig. 27 is a cross sectional view of the device for the disposable capsule of Figs. 25 and 26 during a step of opening and of releasing the coffee powder;
- Fig. 28 is a partial cross sectional view of the device for the disposable capsule of Figs. 25, 26 and 27 after opening the disposable capsule;
- Fig. 29 is a perspective view of the device of Fig. 22, with the rotating portion turned according to the open position of the disposed capsule;
- Fig. 30 is a perspective view of a disposable capsule according to a fourth exemplary embodiment, with the rotating portion in the closed position;
- Fig. 31 is a perspective view of the disposable capsule of Fig. 30, with the rotating portion in an open position;
- Fig. 32 is a partially sectional perspective view of a device for opening the disposable capsule of Figs. 30 and 31, so as to cause the food powder contained therein to be released, with the disposable capsule arranged in a configuration before releasing the coffee powder;
- Figs. 33 and 34 are perspective views of the fixed box portion and of the rotating portion, respectively, of the disposable capsule of the type shown in Figs. 30 and 31, equipped with an element removable by a thrust for recognizing a used disposable capsule;
- Fig. 35 is a perspective view of the rotatable actuator of the device of Fig. 32;
- Fig. 36 is a partially sectional perspective view of the device and of the disposable capsule of Fig. 32, with the rotating portion of the disposable capsule turned in the open position of the disposed capsule;
- Fig. 37 is a perspective view of a modification of the disposable capsule of Figs. 16-21, with the rotating portion in the open position, comprising two different chambers for two different food powders;
- Figs. 38 and 39 are perspective views of the fixed box portion and of the rotating portion, respectively, of the disposable capsule of Fig. 37;
- Fig. 40 is a perspective view of a disposable capsule according to a fifth exemplary embodiment, where the fixed part comprises a case including a filling opening and a corresponding fluid tight cover, with the rotating portion in the closed position;
- Fig. 41 is a sectional perspective view of the disposable capsule shown in Fig. 40;
- Figs. 42, 43 and 44 are perspective views of the cover, of the case and of the rotating portion, respectively, of the disposable capsule of Figs. 40 and 41;
- Figs. 45-47 are sectional perspective views of a disposable capsule according to a sixth exemplary embodiment, where the rotating portion has an unloading opening sealed by a removable membrane sealed to the fixed part, with the rotating portion in the closed position, in a partially open position and in the open position, respectively;
- Fig. 48 is a perspective bottom view of the disposable capsule of Figs. 45-47, with the rotating portion in a partially open position;
- Fig. 49 shows a disposable capsule according to a seventh exemplary embodiment, in which a rotatable container has a discharge opening sealed by a removable membrane that has a portion sealed to a separable portion of the disposable capsule;
- Fig. 50 is a perspective view of the disposable capsule of Fig. 49, without the removable membrane;
- Fig. 51 is a perspective view of a device for opening the disposable capsule of Fig. 49;
- Figs. 52-53 are sectional views of the disposable capsule of Fig. 49 during a step of opening and releasing the coffee powder by means of the opening device of Fig. 51;
- Fig. 54 shows a disposable capsule according to an eighth exemplary embodiment, similar to the disposable capsule of Fig. 49, where the rotatable container has its own rotatable engagement means for engaging with an opening device;
- Fig. 55 is a perspective view of the disposable capsule of Fig. 54, without the removable membrane;
- Figs. 56 and 57 are sectional views of the disposable capsule and of the device of Fig. 55 during a step of opening and releasing the coffee powder from the disposable capsule;
- Fig. 58 shows a device for opening the capsule of Figs. 56 and 57 mounted to an apparatus for preparing Turkish coffee.

### Detailed description of exemplary embodiments of the invention

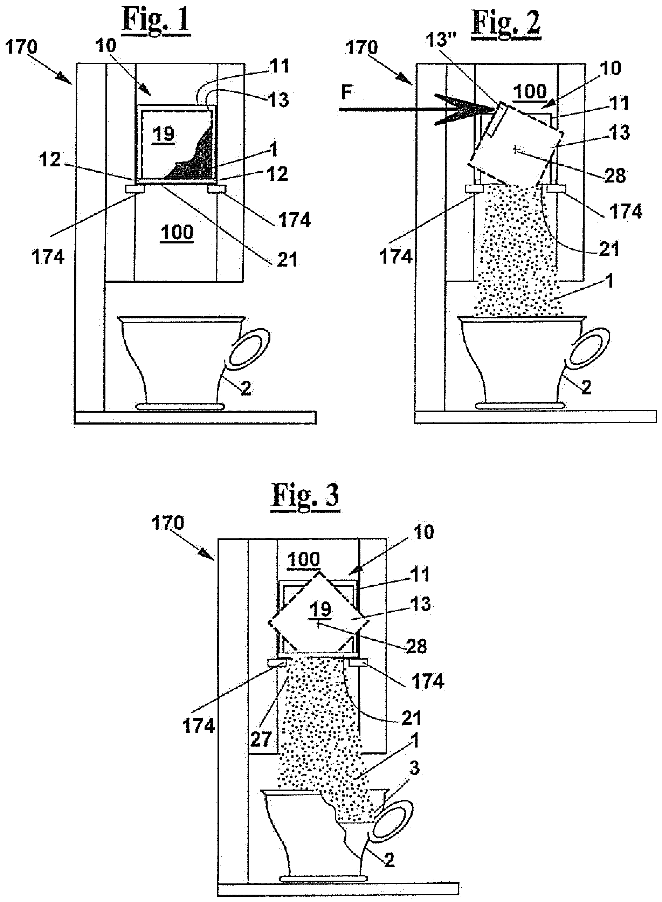

With reference to Figs. 1-3, a disposable capsule container or disposable capsule 10 is described for a coffee powder 1 that can be used for preparing an amount of Turkish coffee, starting from coffee powder 1, wherein the coffee powder must be brought into a preparation container 2 for Turkish coffee 3. This is the way to prepare, in particular, such drinks as Turkish coffee.

Disposable capsule 10 comprises a fixed box portion 11 with an at least partially open face 21 and a rotating portion 13, which is arranged for carrying out a rotation about a rotation axis 28 with respect to fixed box portion 11. Fixed box portion 11 and rotating element 13 are made of a material that is suitable for coming into contact with food, preferably a plastic material.

Fixed box portion 11 and rotating portion 13 are mounted to each other so as to define a chamber 19 available for coffee powder 1, as shown in Fig. 1, in a partially sectioned view. Moreover, rotating portion 13 has a push surface 13" exposed outside of fixed box portion 11, and is arranged to move, during its rotation, from a closed position (Fig. 1) of disposable capsule 10, in which chamber 19 is closed, to an open position (Fig. 3) of disposable capsule 10, in which chamber 19 has an opening 27 toward the outside of disposable capsule 10 at at least partially open face 21 of fixed box portion 11.

According to the invention, a protrusion 12 of the fixed box portion extends from an outer surface thereof, and is configured to engage with an abutment 174 of a housing 100 of a device 170 for opening disposable capsule 10, said housing configured to receive fixed box portion 11.

As shown in Figs. 1-3, if a force F is applied on push surface 13" of rotating portion 13, rotating portion 13 can rotate with respect to fixed box portion 11 from the closed position to the open position, while fixed box portion 11 remains motionless within housing 100, which allows coffee powder 1 to fall from chamber 19 of disposable capsule 10, more precisely through at least partially open face 21 of fixed box portion 11.

As shown more in detail in the subsequent pictures, disposable capsule 10 can also comprise a removable element that is arranged to be removed under a thrust exerted against it, in particular, in a device for opening disposable capsule 10 and for causing the coffee powder contained therein to be released.

Device 170 can also comprise a sensor configured to detect the presence/absence of such a removable element in disposable capsule 10, and to generate an unused-capsule signal of the same, if the removable element is present, as well as a logical means configured to receive the unused-capsule signal and to enable/disable a step of prosecution of making Turkish coffee if the unused-capsule signal is present/absent. For example, a machine for preparing Turkish coffee can be configured so that, if the unused-capsule signal is not present, such steps cannot occur as heating and/or stirring the mixture of coffee powder and water discharged into preparation container 2.

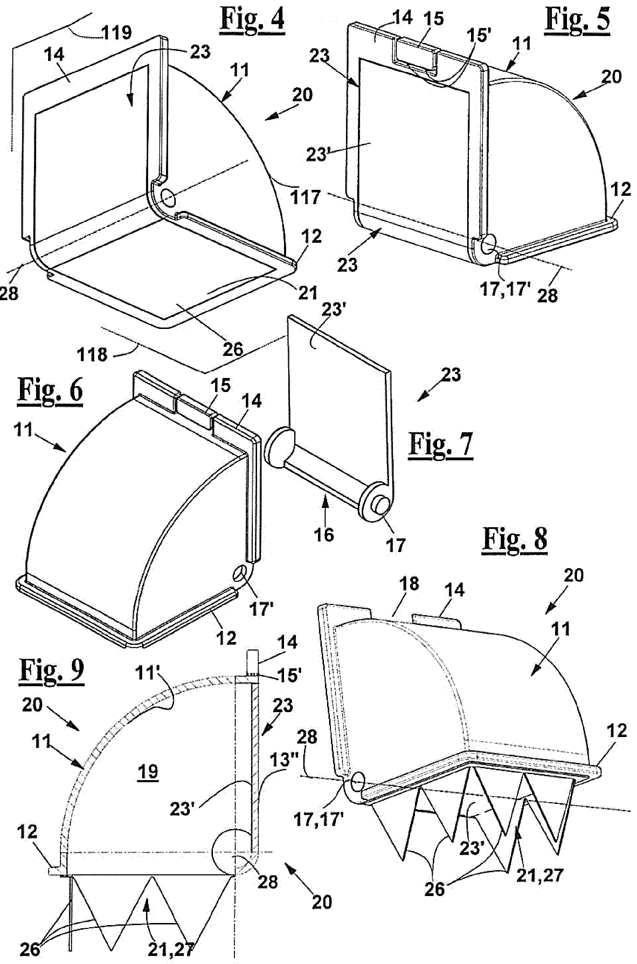

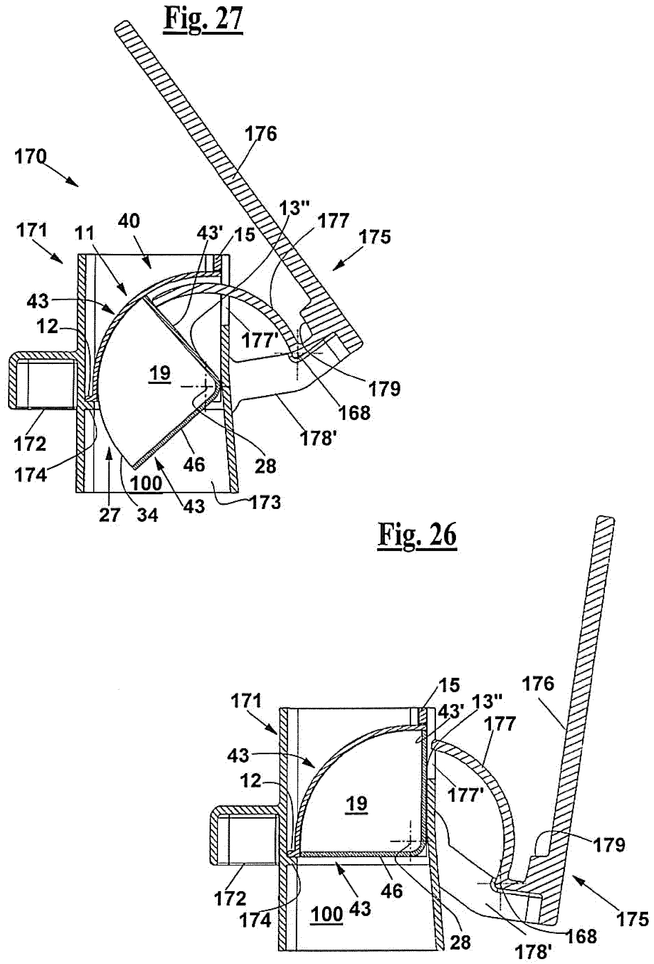

With reference to Figs. 4-9, a single-dose disposable capsule 20 containing coffee powder is described according to a first exemplary embodiment of the invention. In disposable capsule 20, fixed box portion 11 has the shape of a portion of circular cross section cylinder limited by a cylindrical surface 117 and by two planes 118,119 passing through the axis of cylindrical surface 117, not shown. In the preferred exemplary embodiment of Fig. 4, planes 118,119 are perpendicular to each other but more in general they can form solid angles of a different measure. Fixed box portion 11 comprises a flange element 12 such as a protrusion configured to engage with an abutment 174 of housing 100 of device 170 for opening disposable for example capsule 20, as shown in Fig. 26. In this case, flange portion 12 is arranged at plane 118. Optionally, as shown still in Fig. 4, a further flange element 14 at plane 119 can be provided.

Rotating portion 23 and fixed box portion 11 are preferably be mounted to each other in a snap-lock engagement.

Fig. 5 shows a modification of disposable capsule 20 in which a removable element 15 is provided, such as an insert, which is preferably made in further flange element 14 and is arranged to be removed under a thrust exerted against it. For example, removable element 15 can be connected to the rest of flange element 14 through at least one weakened connection portion 15', which can be broken by such a thrust. Once removable element 15 has been removed, a recess 18 is formed, as shown in Fig. 8.

Fixed box portion 11 comprises an openable element 26, arranged so as to seal at least partially open face 21. For example, the openable element can be a membrane element or a film frangible element 26, preferably of aluminium, fixed to the edges of an opening face 21 by a conventional method.

As shown in Figs. 7 and 9, rotating portion 23 of disposable capsule 20 comprises a radial member 23' extending from rotation axis 28 towards or up to an inner face 11' of fixed box portion 11 opposite to axis 28, in this case up an inner face 11' of cylindrical surface 117.

In particular, radial member 23' has a cross section equal to a cross section of fixed box portion 11, apart from a gap required to allow a movable portion 23 to slide within fixed box portion 11.

Radial member 23' has a connection portion 16 (Fig. 7), configured to pivotally engage in a housing 17' (Figs. 5 and 6) of fixed box portion 11, for example connection portion 16 can comprise a pin 17 configured to engage with a hole 17', wherein pin 17 and hole 17' are made at rotation axis 28 of rotating portion 23 with respect to fixed box portion 11. Radial member 23' has an outer face 13" that provides the push surface of rotating portion 23.

As shown in Figs. 8 and 9, as a consequence of a push, i.e. a pressure exerted on push surface 13", and by rotating radial member 23' about its rotation axis 28 accordingly, radial member 23' pushes in turn the coffee powder contained in chamber 19 against openable element 26 and causes the latter to be opened, in particular it causes membrane element 26 to break, which allows the coffee powder to come out from disposable capsule 20 through opening 27 of at least partially open face 21.

In an embodiment, not shown, membrane closure member 26 has some notches, which preferably converge to a same point, typically to a central portion of membrane element 26, in so that the latter is easier to break when a pressure is applied to push surface 13".

Moreover, as more precisely described hereinafter, when rotating portion 23 is removed from the closed position (Figs. 4 and 5) by the push, i.e. when rotating portion 23 is brought to the open position (Figs. 8 and 9), removable element 15 is removed and recess 18 is formed at its place.

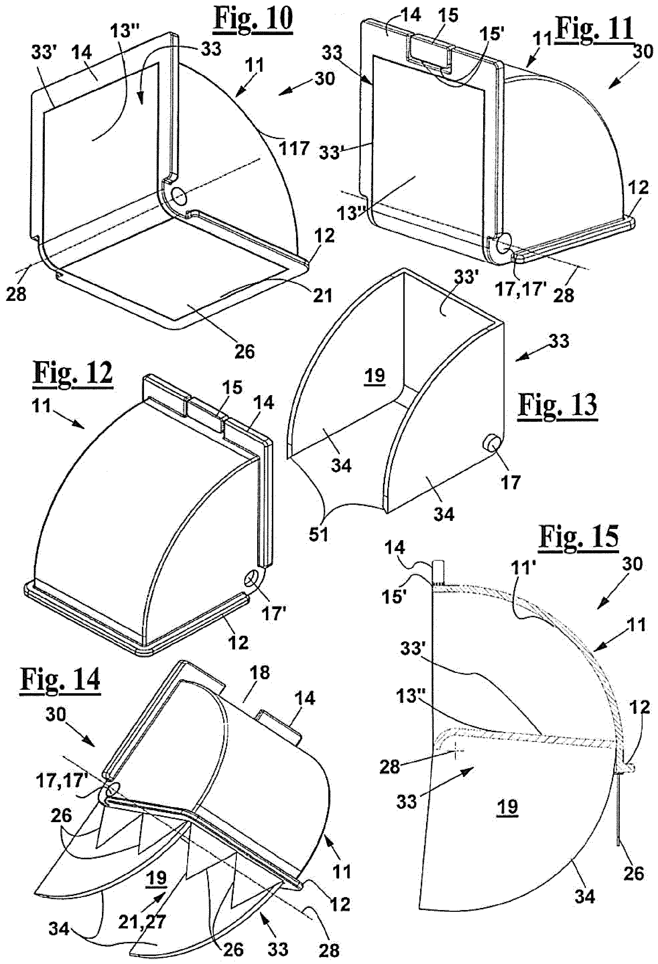

With reference to Figs. 10-15, a disposable capsule 30 is described according to a second exemplary embodiment. Disposable capsule 30 differs from disposable capsule 20 of Figs. 4-9 since rotating portion 33 also comprises a couple of side members 34 that extend from radial member 33' of rotating portion 33 parallel to a respective side surface of fixed box portion 11. In an embodiment, not shown, rotating portion 33 comprises only one side member 34.

In the embodiment of Fig. 13, rotating portion 33 of disposable capsule 30 optionally comprises cut elements 51 for cutting, i.e. tearing openable element 26 when a pressure is applied on push surface 13" of rotating portion 33, which is provided, even in this case, by a surface of radial member 33' facing outside of disposable capsule 30. Still in the embodiment of Fig. 13, each cut element 51 is integral to a respective side member 34, more in particular, each cut element 51 is made at an edge of a respective side member 34 that has a cutting profile portion or that is in any case configured to cut or tear membrane 26. In an embodiment, not shown, however, an integral cut element can be provided that extends between radial member 33' of rotating portion 33 and a position at a distance from side members 34. Obviously, cut elements can be provided even if side members 34 are not present, as in a modification of disposable capsule 20 of Figs. 4-9.

Also in this case, in a modification of disposable capsule 30 shown in Figs. 11, 13, 14 and 15, a removable element 15 is provided that is arranged to be removed under a thrust exerted against it and to leave a recess 18 at its own place once it has been removed.

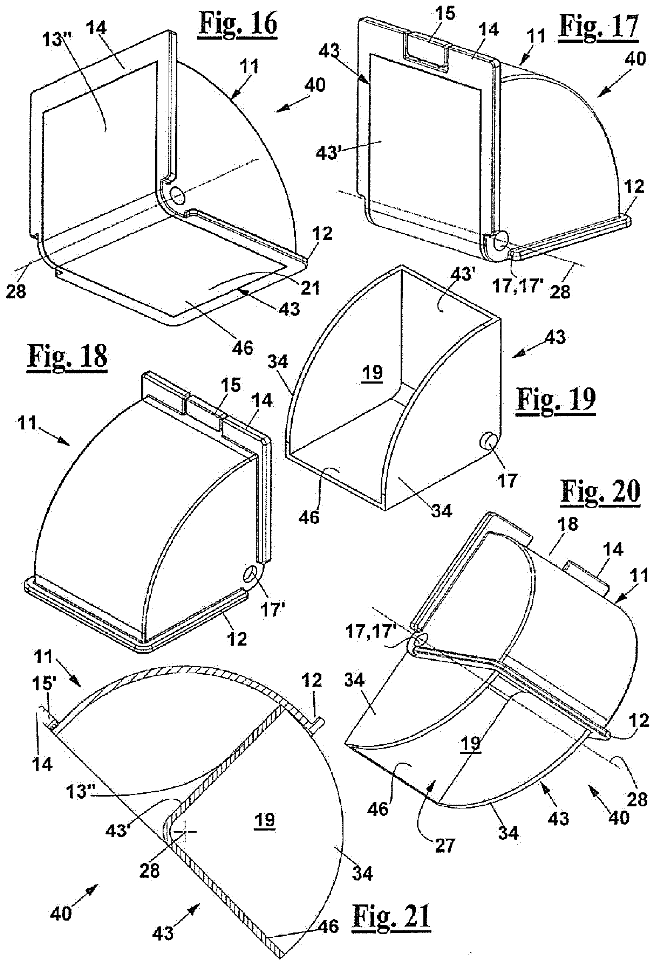

With reference to Figs. 16-21, a disposable capsule 40 is described according to a third exemplary embodiment. Disposable capsule 40 differs from disposable capsule 30 of Figs. 10-15 since rotating portion 43 also comprises a second radial member 46, which defines, along with the first and the second radial member 43',46 and two side members 34, a movable chamber or recess 49 within fixed box portion 11. More in detail, second radial member 46, in the open position of rotating element 43, is arranged at at least partially open face 21 of fixed box portion 11. In particular, a sealing means is provided between first and second radial member 43',46 and the faces of fixed box-like element 11 at planes 118,119.

Also in this case, fixed box portion 11 and rotating portion 43 can be mounted to each other in a snap-lock engagement. The disposable capsule can be filled, once mounted, by arranging it in the open position, at an angle of 45° with respect to the horizontal, and with fixed box portion 11 facing downwards.

Once it has been filled, disposable capsule 40 can be closed by causing rotating portion 43 to rotate until it attains the closed position. Preferably, snap-lock elements are provided, not shown, in order to maintain the capsule in the closed position. Optionally, protection films can be provided at radial members 43',46 in order to seal the disposable capsule.

As shown in Figs. 20, 21, 27, 28, if a push, i.e. a pressure, is exerted on push surface 13", so that rotating portion 43 rotates about rotation axis 28, fixed box portion 11 gradually protrudes through at least partially open face 21, i.e. chamber or recess 19 is increasingly opened, which causes the coffee powder contained therein to come out, in particular to fall.

Also in this case, in a modification of disposable capsule 40 as shown in Figs. 17, 19, 20 and 21, a removable element 15 is provided, that is arranged to be removed under the effect of a thrust exerted against it, and to leave a recess 18 at its place after once it has been removed.

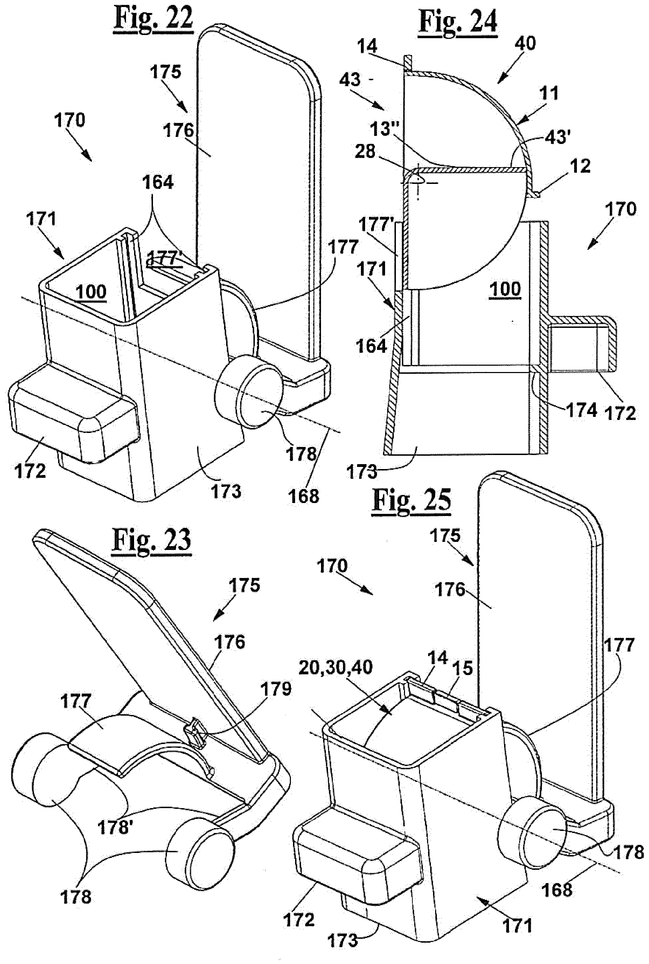

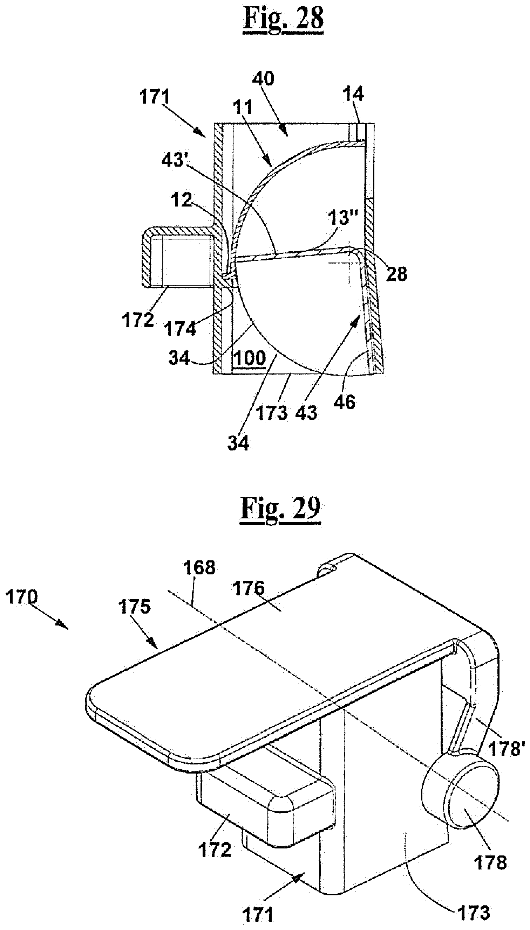

Figs. 22 and 29 show a device 170 for opening disposable capsule 20,30,40 of Figs. 4-21, in order to cause food powder 1 contained therein to be released to prepare Turkish coffee. Device 170 comprises a box 171 with a discharge opening 173 for coffee powder 1, and with an actuator 175, rotatably arranged with respect to box 171 about a further rotation axis 168. Box 171 defines a housing 100, which in this case has the shape of a substantially prismatic duct, and is preferably equipped with a fastening element to fix it to a support, not shown, in order to arrange device 170 with its housing or duct 100 in a substantially vertical position, and with discharge opening 173 facing downwards. A handle 172 can be provided to assist device 170 to be introduced into and extracted from the support.

As shown in Figs. 25 and 26, box 171 is configured to rotatably receive disposable capsule 20,30,40 into its own housing 100. Moreover, box 171 comprises an abutment 174 arranged within housing 100 and configured to abut against protrusion 12 of box-like portion 11 in such a way that protrusion 12 rests upon abutment 174 by gravity. As an alternative, reversible snap-lock devices can be provided between disposable capsule 20,30,40 and the inside of housing 100. In the embodiment shown in Figs. 22, 25 and 26, longitudinal guides 164 are provided that are configured to slidingly receive such elements as side portions of flange 14 of disposable capsule 20,30,40, in order to assist the disposable capsule to be correctly positioned, i.e. correctly oriented, within housing 100. More in detail, flange 14 of fixed box portion 11 provides vertical guides, which have a shape different from the perimeter edge present on the lower face, so as to prevent any introduction in a wrong position.

In an exemplary embodiment, rotatable actuator 175, shown more in detail in Fig. 23, can comprise a manoeuvre portion 176 and a push portion 177 integral to each other. In particular, manoeuvre portion 176 extends along a plane and is configured to be manually pushed against box 171 by a user, in order to cause rotatable actuator 175 to turn about its own rotation axis 168. Box 171 of device 170 has a passageway 177' for push portion 177 (Figs. 22,27), so that the latter can push against surface 13" of rotating portion 43 of disposable capsule 40 or, even unless shown, against push surface 13" of rotating portion 23,33 of disposable capsule 20,30, respectively (Figs. 4-15).

This way, as shown in Figs. 26-28, rotatable actuator 175 rotates about its rotation axis 168, and at the same time it causes rotating portion 43 of disposable capsule 40 to rotate about its rotation axis 28, from the closed position of Fig. 26 to the open position of Fig. 28 through a condition of partial opening as shown in Fig. 27.

In the embodiment of Figs. 23, 26 and 27, device 170 comprises a removal means 179 for removing removable element 15 from disposable capsule 20 when one is using it. This removal means can comprise a break tooth 179, which is preferably made as a stiffening rib of the lever or of manoeuvre portion 176, and which is arranged for thrusting removable element 15 of fixed box portion 11 of single-dose capsules 20,30,40 of Figs. 5, 11, 17 when rotatable actuator 175 is caused to rotate. In this case, break tooth 179 thrusts removable element 15 of disposable capsule 40, for example by breaking weakened connection portions 15' connecting It to the rest of disposable capsule 40, for instance to a flange portion 14 thereof, and forming a recess 18 at removable element 15, while insert 15 is collected within housing 100.

Device 170 can comprise a sensor, not shown, which is arranged for measuring the presence of removable element 15, i.e. an integrity sensor of disposable capsule 10. The integrity sensor may have the shape of a key that protrudes from rotatable actuator 175, that is arranged to be compressed during the rotation of rotatable actuator 175, and that is configured to generate an electric presence/absence signal of removable element 15. A logical means of the device, not shown, is configured to receive and to process the presence/absence signal.

In particular, if the integrity of disposable capsule 10 is detected, the logical means of device 170 can provide a permission signal to the water supply means for delivering water to the Turkish coffee preparation container, in a subsequent step of the Turkish coffee preparation process. In the opposite case, this permission signal is not generated, or a signal is generated that indicates a previous use of disposable capsule 10, in order to prevent one to reuse it.

In particular, the integrity sensor can be integrated with break tooth 179. More in detail, break tooth 179 can have a central hole, not shown, through which the push button protrudes, which is configured to apply a reaction force to removable element 15 not strong enough to remove it, when rotatable actuator 175 is rotating.

Subsequently, removable element 15 of the disposable capsule comes into contact with break tooth 179, which causes it to be the removed, leaving in the disposable capsule a lack of material, i.e. a recess 18 where removable element 15 was arranged.

Fig. 24 shows disposable capsule 40 after its use, in an extraction step of disposable capsule 40 from device 170, where disposable capsule 40 engages an upper opening of fixed box-like portion 171 that had been previously used for its own introduction into housing 100.

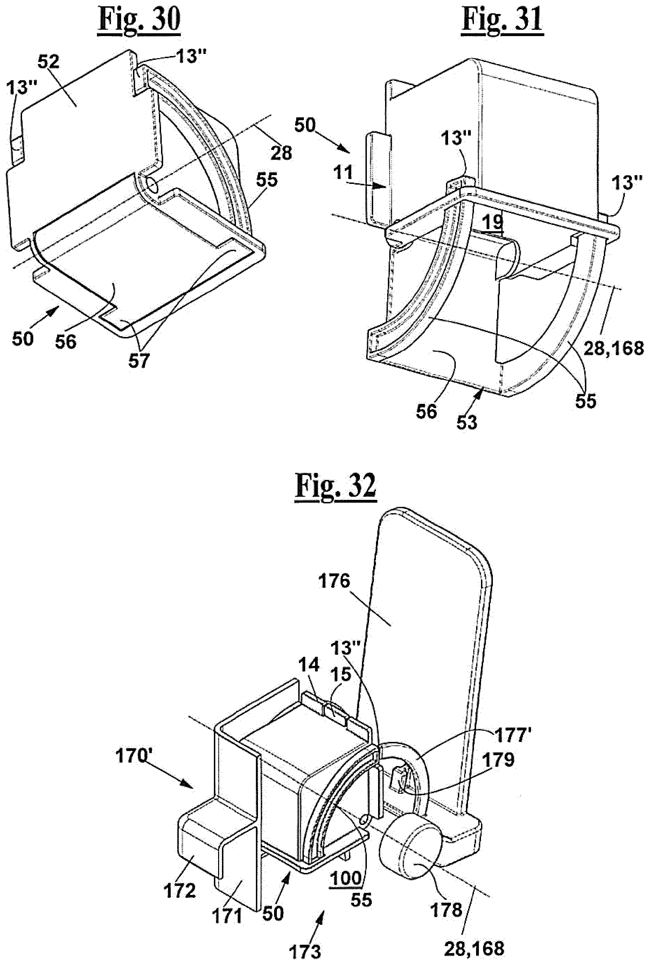

With reference to Figs. 30-36, a disposable capsule 50 is described according to a fourth exemplary embodiment. In this case, fixed box portion 11 has a substantially cubical shape, whose longitudinal cross section, i.e. in a plane perpendicular to rotation axis 28, is substantially square. However, the fixed box portion of the device according to the fourth exemplary embodiment, or its longitudinal cross section, can also have a different shape.

Rotating portion 53 of disposable capsule 50 comprises a fixed closure member 52 and a door closure member 56 configured to seal at least partially open face 21 of fixed box portion 11, when rotating portion 53 is at the closed position (Figs. 30 and 32).

In disposable capsule 50, closure member 56 comprises two side extensions 57 arranged at opposite sides with respect to fixed box portion 11, from which respective push elements 55 extend adjacent to the side faces of fixed box portion 11. In this case, push elements 55 have a shape of an arc of circumference, more in detail, they have the shape of a sector of an annulus. The end portion of each push element 55 opposite to respective extension side 57 exposes a surface configured as push surface 13";

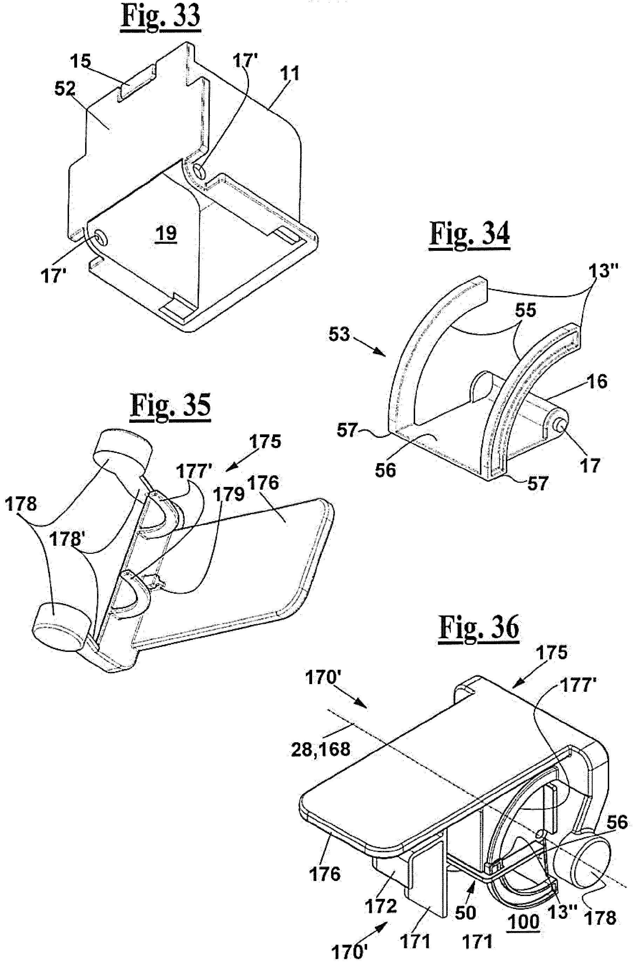

Figs. 32 and 36 show a device 170' for opening disposable capsule 50 of Figs. 30, 31, 33, 34, to cause food powder 1 contained therein to be released to prepare Turkish coffee. Device 170' differs from device 170 of Fig. 22 in that it has two push portions 177' in its own movable actuator 175, configured to come into contact with two respective push surfaces 13", and in that no passageway is provided for these push portions 177'.

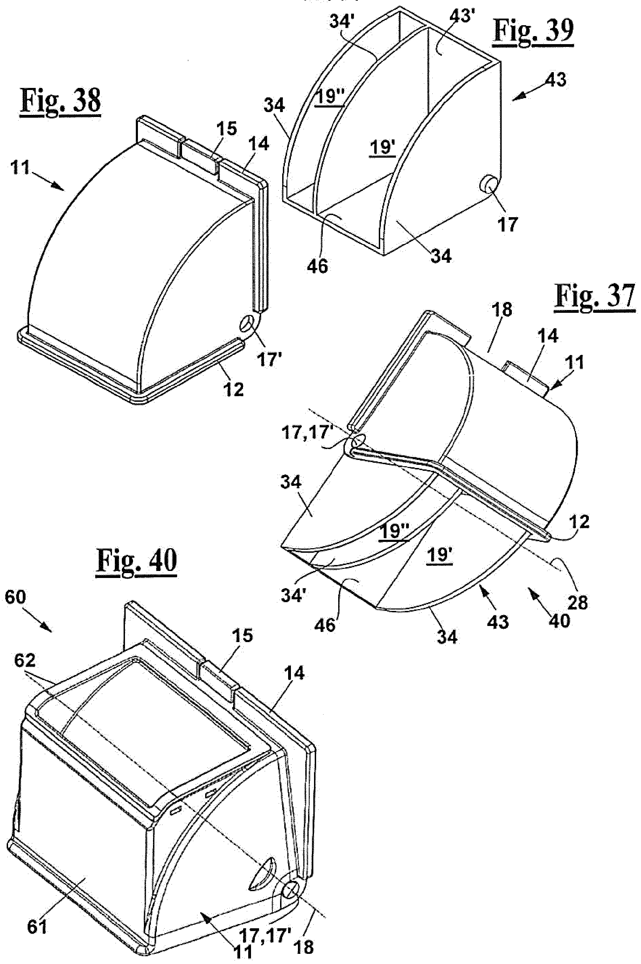

In Fig. 37, a disposable capsule 40' is shown according to a modification of disposable capsule 40 according to the embodiment of Figs. 16-21, in which a wall 34' extends from radial member 43', so as to divide the room within fixed box portion 11 into two distinct chambers 19' and 19" for two different food powders. In particular, wall 34' is arranged parallel to side members 34 of rotating portion 43 of disposable capsule 40' dividing the room within rotating portion 43. This modification is useful to prepare drinks starting from two different powders that must not mix before coming into contact with water. Figs. 38 and 39 show the fixed box portion and the rotating portion, respectively, of disposable capsule 40' of Fig. 37.

In Figs. 37-39, a modification is shown of disposable capsule of Figs. 16-21 only, which is modified by middle wall 34', however also the single-dose capsules according to the other exemplary embodiments can be modified this way, in a manner that is obvious for a skilled person.

Figs. 40-44 show a disposable capsule 60 according to a fifth exemplary embodiment of the invention, in which fixed portion 11 comprises a case 61 having a fill opening 64 and a cover 62 configured to tightly block fill opening 64. In the shown embodiment, fill opening 64 is made on a face of case 61 opposite to at least partially open face 21 of fixed box portion 11, but it could be made also somewhere else, for example in side walls 61' of case 61. In the shown embodiment, case 61 and cover 62 comprise respective mutually sliding plane engagement elements 61',62';61",62", substantially consisting of portions of their side walls, which extend from one side of at least partially open face 21 of the disposable capsule, once the later has been mounted. Preferably, cover 62 comprises a curved part 62"' that slidingly engages with rotating portion 63. Case 61 and cover 62 comprise mutually engaging snap-lock elements, which in the shown embodiment consists of holes 66 made on sliding engagement elements 61' of case 61 and of projections 67 protruding from lateral sliding engagement elements 62' of the cover and arranged for engaging with respective holes 66, respectively. The relative position of holes 66 and of projections 67 could also be opposite with respect to the picture.

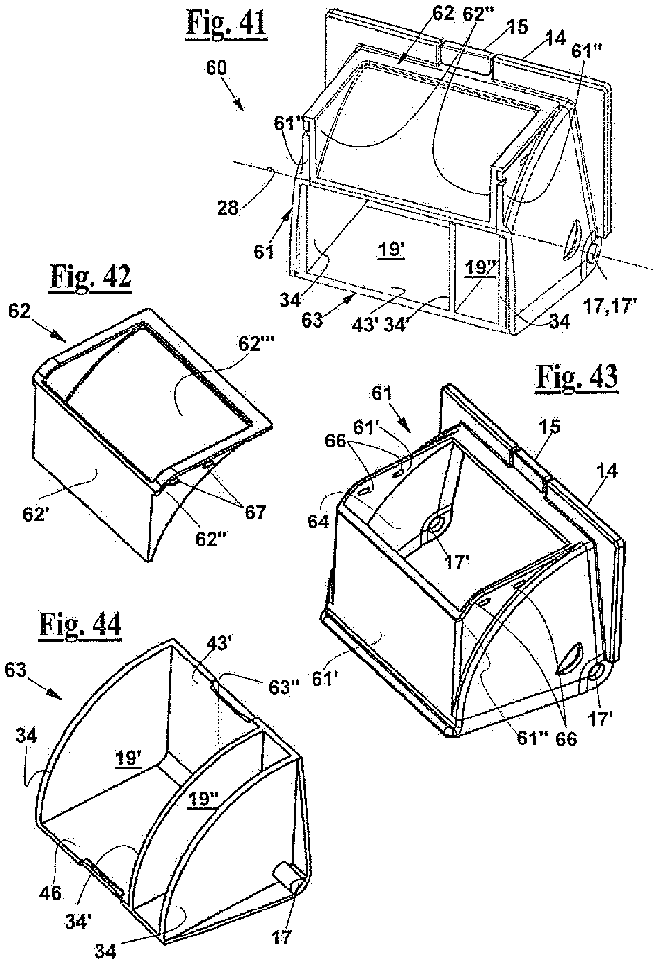

In Fig. 44 a disposable capsule according to an embodiment is shown in which a wall 34' extends from radial member 43', so as to divide the room within fixed box portion 11 into two distinct chambers 19' and 19" for two different food powder. In particular, wall 34' is arranged parallel to side members 34 of rotating portion 63 of disposable capsule 60 dividing the room within rotating portion 63. This modified embodiment is useful to prepare drinks starting from two different powders that must not mix before coming into contact with water.

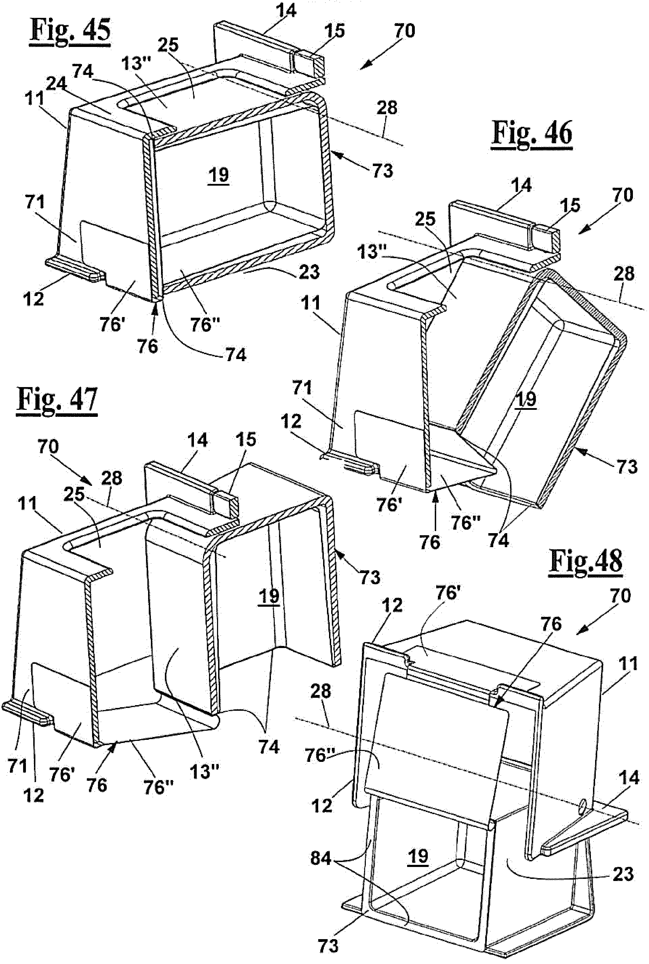

Figs. 45-48 show a disposable capsule 70 according to a sixth exemplary embodiment of the invention, in which rotating portion 73 is a cup and chamber 19 is fully defined within this cup. Cup 73 has an opening defined by an edge 74 that is arranged at a predetermined distance from rotation axis 28. Disposable capsule 70 comprises a membrane 76 that has an own retaining portion 76' stuck on a frame-fixing portion 71 of fixed box portion 11 adjacent to a side of edge 74, and an own closure portion 76", adjacent to retaining portion 76', continuously stuck on edge 74, so as to seal cup 73.

Rotating cup portion 73 has a rectangular or square cross section, for example, it can have a substantially parallelepiped or frustum-pyramidal shape, as well as fixed box portion 11. Protrusion 12 of fixed box portion 11, in this case a flange element 12, is adjacent to a first opening 23 made at a base of fixed box portion 11, through which the rotating portion can pass, by rotating about its axis 28 (Figs. 46,47). Fixed box portion 11 has a second opening 25 in a base 24 opposite to opening 23, so that rotating portion 73 exposes push portion 13" out of capsule 70, on which an actuator of an opening device, not shown, can act.

Due to the rotation about axis 28, closure portion 76" of membrane 76 is progressively detached from edge 74 of rotating portion 73 to allow the coffee powder, not shown, to be released, provided the adhesion force between retaining portion 76' and frame-fixing portion 71 of fixed box portion 11 is stronger than the adhesion force between closure portion 76" and edge 74. In order to properly discharge coffee powder 1, an opening device, not shown, is configured to receive disposable capsule 70 arranged so that protrusion 12 and first opening 23, face downwards, and are preferably arranged horizontally.

According to a modification of the sixth exemplary embodiment, a removable element 15 can be provided, for example in the form of an insert, preferably made in a further flange element 14, which is arranged to be removed under a thrust exerted against it when the capsule is used, as described with reference to Fig. 5.

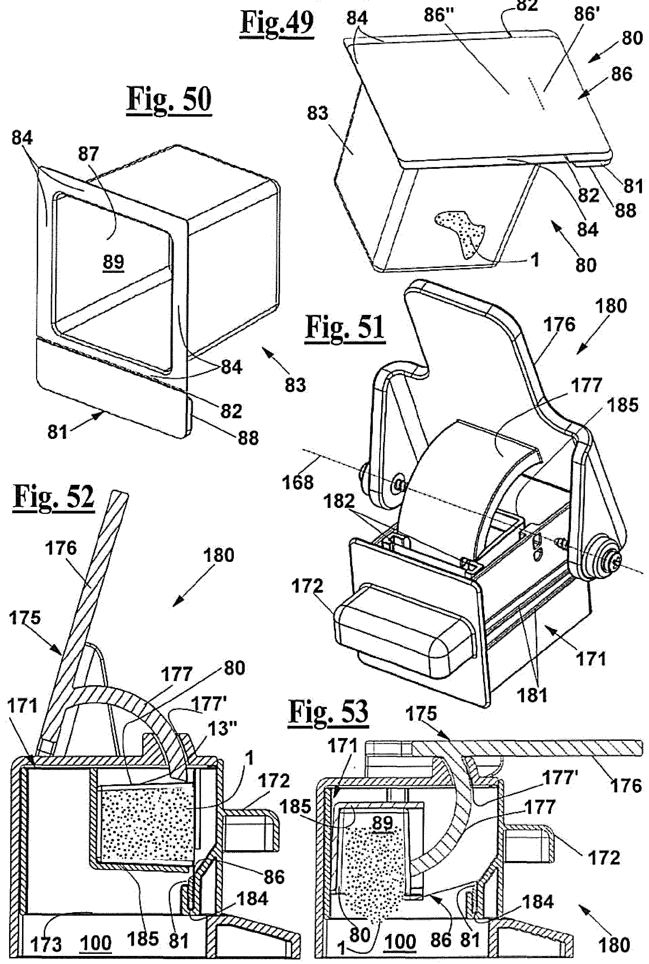

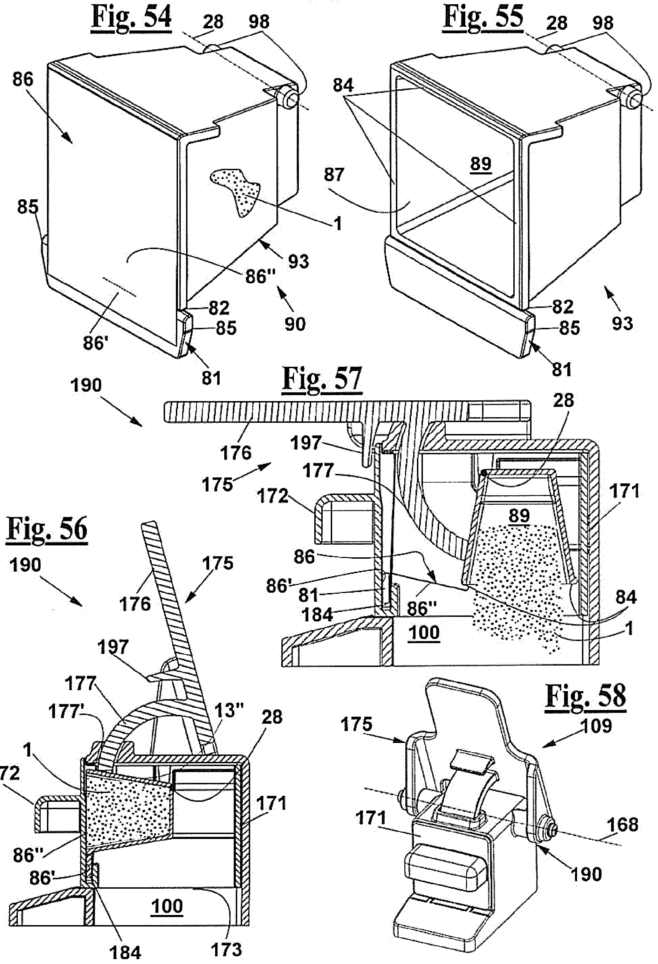

Figs. 49 and 54 show two disposable capsules 80,90, according to another aspect of the invention, which contain coffee powder 1, and which are configured for preparing Turkish coffee. Capsules 80,90 comprise respective cup portions 83,93, as shown in Figs. 50,55, which define a chamber 89 for coffee powder 1. Cup portions 83,93 have a mouth 87 and an edge 84, in this case of rectangular or square shape, about mouth 87.

Along a side of edge 84 respective flat protruding portions 81 of disposable capsule 80,90 are arranged that have a predetermined thickness and are separated from the side of edge 84 by a weakened joint portion 82, which can be easily broken by a shear force, applied substantially orthogonally to edge 84 and to protruding portions 81.

Protruding portions 81 are made in such a way that they can be fixedly connected to each other in a seat 184 of a respective opening device 180,190, i.e. in a housing 100 thereof, as shown in Figs. 52,53,56,57. In device 180,190 a guide 182 is provided of (Fig. 51) to assist capsule 80,90 to be introduced and positioned. In particular, engagement portion 81 can have engagement elements 85 that can be engaged with guide 182 and that protrude laterally with respect to edge 84, as shown in Figs. 54 and 55.

Disposable capsules 80,90 also comprise a sealing membrane 86 that has an own retaining portion 86' stuck on engagement portion 81 adjacent to a side of edge 84, and an own closure portion 86", adjacent to retaining portion 86', continuously stuck on edge 84, so as to seal cup portion 83.

Cup portion 83,93 is configured to rotate about a rotation axis 28 integral to opening device 180,190 and is also provided with a push surface 13" exposed outside of housing 100, in such a way that a pressure exerted on rotating portion 83,93 through push surface 13" causes cup portion 83,93 to rotate about its rotation axis 28. This way, weakened joint portion 82 is broken and, accordingly, as shown in Figs. 52,53,56,57, cup portion 83 is detached and is brought away progressively from fixed flat protruding portion 81, moving from a closed position, in which chamber 89 is sealed by sealing membrane 86 (Figs. 52,47), to an open position, in which chamber 89 is open to the outside through mouth 87 at a part of edge 84 that now is free from sealing membrane 86 (Figs. 44,48).

Disposable capsule 80,90 is advantageously made of a plastic material suitable to safely come into contact with food, in particular by thermoforming, as in the case of capsule 80 (Figs. 41,42), according to a seventh exemplary embodiment, or by injection moulding, as in the case of capsule 90 (Figs. 45,46). The injection moulding technique make it possible to obtain capsule portions that have an average thickness generally larger than in the thermoforming technique. Therefore, in disposable capsule 80, engagement portion 81 is preferably equipped with a stiffening layer 88 stuck to a side opposite to sealing membrane 86.

In particular, cup portion 93 of disposable capsule 90, according to an eighth exemplary embodiment, comprises its own rotatable engagement means 98 to engage with an opening device 190 (Figs. 48,49), in this case in the form of a couple of pins 98 (Figs. 45,46) that can engage with a rotation seat of an opening device 190.

With reference to Figs. 52,53,56,57 a system is described, according to a further aspect of the invention, for preparing Turkish coffee. Such system comprises the disposable capsule according to the seventh or to the eighth exemplary embodiment of the invention, as described above, and a device 180 or 190, to open disposable capsule 80,90, respectively. Device 180, 190 comprises a box 171 having a discharge opening 173 for coffee powder 1, an actuator 175 movable with respect to box 171 and comprising a manoeuvre portion 176 outside of box 171 and a push portion 177 within the box, integral to each other, preferably, as in this case, a rotatable actuator 176 arranged to rotate about a further rotation axis 168. In box 171, a seat is provided 184, in this case arranged vertically, that is configured to be fastened with engagement portion 81 of disposable capsule 80,90, preferably, as in this case, by a fixed joint. Moreover, box 171 has a rotatable engagement means that is rotatably arranged about a rotation axis 28 and that can engage with disposable capsule 80,90.

This way, as described, by bringing push portion 177 against a push surface 13" of disposable capsule 80,90, the disposable capsule can rotate about its rotation axis 28 moving from a closed position (Figs. 43,47), where chamber 89 is sealed by closure portion 86" of sealing membrane 86, to an open position (Figs. 44,48), where chamber 89 is open to the outside through mouth 87 at a part of edge 84 that now is free from sealing membrane 86.

In an exemplary embodiment (Figs. 42,43), the rotatable engagement means of disposable capsule 80 with respect to box 171 of device 180 comprises a support 185 configured to receive disposable capsule 80, housed within box 171 of device 180 and arranged to rotate about its rotation axis 28. In this case, the support is a cup holder element 185 configured to contain cup portion 83.

In another exemplary embodiment (Figs. 47,48), the rotatable engagement means comprises a couple of pins 98 and a couple of respective housings for pins 98, wherein the pins and the housings are integral to disposable capsule 90 and to box 171 of device 190, respectively. In an embodiment, not shown, the pins and the housings are integral to box 171 of device 190 and to disposable capsule 90, respectively.

As shown in Fig. 58, device 190 for opening capsule 90 can be mounted to an apparatus 109 for preparing Turkish coffee. Apparatus 109 can be an existing apparatus, and device 190 provides a retrofit solution thereof. Similar considerations apply also to previously described devices 170,180. In particular, the device can have guides 181 (Fig. 51) to assist device 180 to be introduced into the apparatus or into the support and to be positioned within it, in order to prepare Turkish coffee.

The foregoing description of exemplary specific embodiments of the disposable capsule and of the device according to the invention, and of its mode of use, will so fully reveal the invention according to the conceptual point of view, so that others, by applying current knowledge, will be able to modify and/or adapt for various applications these embodiments without further researches and without parting from the invention, and it is therefore to be understood that such adaptations and modifications will have to be considered as equivalent of the specific embodiments. The means and the materials to provide the various functions described herein could have a different nature without, for this reason, departing from the scope of the invention. It is meant that the phraseology or terminology employed herein is for the purpose of description and, for this reason, not of limitation.

## Claims

1. A disposable capsule (80,90) containing coffee powder (1), configured to be used for preparing Turkish coffee (3) in a device (180) for delivering said Turkish coffee (3), said disposable capsule comprising:
- a cup portion (83,93) defining a chamber (89) containing said coffee powder (1), said cup portion (83,93) having a mouth (87) and an edge (84) about said mouth (87);
- an engagement portion (81) protruding from one side of said edge and configured to be fixedly connected in a seat (184) of a housing (100) of said device (180);
wherein said cup portion (83,93) is configured to pivotally engage with respect to the housing (100) about a rotation axis (28),
wherein said capsule (80,90) comprises a sealing membrane (86) having:
- a retaining portion (86') stuck on said engagement portion (81) adjacent to a side of said edge (84), and
- a closure portion (86") continuously stuck on said edge (84), so as to seal said chamber of said cup portion (83,93);
and wherein said capsule (80, 90) being **characterized in that** said cup portion (83,93) has a push surface (13") exposed outside said housing (100), in such a way that a force exerted on said cup portion (83,93) through said surface thereof (13") causes a rotation of said cup portion (83,93) with respect to the housing(100) and **in that** said engagement portion (81) is joined to a side of said edge (84) through a weakened joint portion (82), which is configured in such a way that said rotation causes said weakened joint portion (82) to break and said cup portion (83) to be disengaged from said engagement portion (81), and therefore causes said retaining portion (86') and said engagement portion (81) to be moved away together and said closure portion (86") to be peeled away from said mouth (87) of said cup portion (83,93), while said cup portion (83,93) moves:
- from a closed position (80,90), in which said chamber (89) is sealed by said closure portion (86") of said sealing membrane (86),
- to an open position (80,90), in which said chamber (89) is open to the outside through said mouth (87) at a part of said edge (84) now free from said sealing membrane (86).

2. A disposable capsule (90) according to claim 1, wherein said cup portion comprises a rotatable engagement means (98) for rotatably engaging with said housing (100).

3. A disposable capsule (90) according to claim 1, wherein said cup portion is made by injection moulding of a plastic material.

4. A disposable capsule (80) according to claim 1, wherein said cup portion is made by thermoforming a plastic material, and said engagement portion (81) comprises a stiffening layer (88) stuck opposite to said retaining portion of said sealing membrane (86).

5. A system for preparing Turkish coffee (3), comprising:
- a disposable capsule (80,90) comprising:
- a cup portion (83,93) defining a chamber (89) containing said coffee powder (1), said cup portion (83,93) having a mouth (87) and an edge (84) about said mouth (87),
- an engagement portion (81) protruding from one side of said edge;
- a sealing membrane (86) having:
- a retaining portion (86') stuck on said engagement portion (81) adjacent to a side of said edge (84), and
- a closure portion (86") continuously stuck on said edge (84), so as to seal said chamber of said cup portion (83,93);
wherein said engagement portion (81) is joined to a side of said edge (84) through a weakened joint portion (82),
- a device (180,190) for opening said disposable capsule (80,90), in order to cause said coffee powder to be released, said system (3) being **characterized in that** said device (180,190) comprises:
- a box (171) having a discharge opening (173) for said coffee powder (1);
- an actuator (175) movable with respect to said box (171) and comprising a manoeuvre portion (176) outside of said box (171) and a push portion (177) within said box, integral to each other,
wherein said box (171) encloses a seat (184) configured to fasten on itself said engagement portion (81) of said disposable capsule (80,90),
wherein said box (171) is configured to pivotally receive said disposable capsule (80,90) about a rotation axis (28),
such that, by displacing said push portion (177) against a push surface (13") of said disposable capsule (80,90), said disposable capsule rotates about its rotation axis moving:
- from a closed position, in which said chamber (89) is sealed by said closure portion (86") of said sealing membrane (86),
- to an open position, in which said chamber (89) is open to the outside through said mouth (87) at a part of said edge (84) now free from said sealing membrane (86).

6. A system according to claim 5, wherein said device (180) comprises a support (185) configured to receive said disposable capsule (80), wherein said support is pivotally housed within said box (171) of said device (190) about the rotation axis (168).

7. A system according to claim 5, wherein said disposable capsule (90) and said device (190) comprise a mutual engagement means that is rotatably arranged about the rotation axis (168).

8. A system according to claim 7, wherein said mutual rotatable engagement means comprises a couple of pins (98) and a couple of respective housings for said pins (98), said pins and said housings integral to said disposable capsule (90) and to said box (171) of said device (190), respectively, or vice-versa.

9. A system according to claim 5, wherein said actuator (175) is a rotatable actuator rotatably arranged about a further rotation axis (168).

10. The use of a system according to claim 5 in an existing apparatus for preparing Turkish coffee (3).

## Patentansprüche

1. Einwegkapsel (80,90), die Kaffeepulver (1) enthält, die konfiguriert ist, um zur Herstellung von türkischem Kaffee (3) in einer Vorrichtung (180) zur Abgabe des türkischen Kaffees (3) verwendet zu werden, wobei die Einwegkapsel umfasst:
- einen Becherabschnitt (83,93), der eine Kammer (89) definiert, die das Kaffeepulver (1) enthält, wobei der Becherabschnitt (83,93) eine Öffnung (87) und einen Rand (84) um die Öffnung (87) aufweist;
- einen Eingriffsabschnitt (81), der aus einer Seite des Randes herausragt und konfiguriert ist, um fest in einem Sitz (184) eines Gehäuses (100) der Vorrichtung (180) verbunden zu sein;
wobei der Becherabschnitt (83, 93) konfiguriert ist, um in Bezug auf das Gehäuse (100) um eine Drehachse (28) schwenkbar in Eingriff zu stehen,
wobei die Kapsel (80, 90) eine Dichtungsmembran (86) umfasst, die aufweist:
- einen Halteabschnitt (86'), der an dem Eingriffsabschnitt (81) neben einer Seite des Randes (84) haftet, und
- einen Verschlussabschnitt (86"), der ununterbrochen an dem Rand (84) haftet, um die Kammer des Becherabschnitts (83,93) abzudichten; und wobei die Kapsel (80, 90) **dadurch gekennzeichnet ist, dass** der Becherabschnitt (83, 93) eine Druckfläche (13") aufweist, die außerhalb des Gehäuses (100) so freigelegt ist, dass eine auf den Becherabschnitt (83,93) durch die Oberfläche davon (13") ausgeübte Kraft eine Drehung des Becherabschnitts (83,93) in Bezug auf das Gehäuse (100) bewirkt und dass der Eingriffsabschnitt (81) mit einer Seite des Randes (84) durch einen geschwächten Verbindungsabschnitt (82) verbunden ist, der so konfiguriert ist, dass die Drehung bewirkt, dass der geschwächte Verbindungsabschnitt (82) bricht und der Becherabschnitt (83) von dem Eingriffsabschnitt (81) gelöst wird, und daher bewirkt, dass der Halteabschnitt (86') und der Eingriffsabschnitt (81) zusammen wegbewegt werden und der Verschlussabschnitt (86") von der Öffnung (87) des Becherabschnitts (83,93) abgezogen wird, während sich der Becherabschnitt (83,93) bewegt:
- von einer geschlossenen Position (80, 90), in der die Kammer (89) durch den Verschlussabschnitt (86") der Dichtungsmembran (86) abgedichtet ist;
- zu einer offenen Position (80, 90), in der die Kammer (89) durch die Öffnung (87) an einem Teil des Randes (84), der nun frei von der Dichtungsmembran (86) ist, nach außen offen ist.

2. Einwegkapsel (90) nach Anspruch 1, wobei der Becherabschnitt eine drehbare Eingriffseinrichtung (98) zum drehbaren Eingriff mit dem Gehäuse (100) umfasst.

3. Einwegkapsel (90) nach Anspruch 1, wobei der Becherabschnitt durch Spritzgießen eines Kunststoffs hergestellt wird.

4. Einwegkapsel (80) nach Anspruch 1, wobei der Becherabschnitt durch Thermoformen eines Kunststoffs hergestellt wird und der Eingriffsabschnitt (81) eine Versteifungsschicht (88) umfasst, die gegenüber dem Halteabschnitt der Dichtungsmembran (86) haftet.

5. System zur Zubereitung von türkischem Kaffee (3), umfassend:
- eine Einwegkapsel (80,90), umfassend:
- einen Becherabschnitt (83,93), der eine Kammer (89) definiert, die das Kaffeepulver (1) enthält, wobei der Becherabschnitt (83,93) eine Öffnung (87) und einen Rand (84) um die Öffnung (87) aufweist,
- einen Eingriffsabschnitt (81), der aus einer Seite des Randes herausragt;
- eine Dichtungsmembran (86), die aufweist:
- einen Halteabschnitt (86'), der an dem Eingriffsabschnitt (81) neben einer Seite des Randes (84) haftet, und
- einen Verschlussabschnitt (86"), der ununterbrochen an dem Rand (84) haftet, um die Kammer des Becherabschnitts (83,93) abzudichten;
wobei der Eingriffsabschnitt (81) mit einer Seite des Randes (84) durch einen geschwächten Verbindungsabschnitt (82) verbunden ist,
- eine Vorrichtung (180, 190) zum Öffnen der Einwegkapsel (80, 90), um zu bewirken, dass das Kaffeepulver freigesetzt wird, wobei das System (3) **dadurch gekennzeichnet ist, dass** die Vorrichtung (180, 190) umfasst:
- einen Kasten (171) mit einer Auslassöffnung (173) für das Kaffeepulver (1);
- ein Stellglied (175), das in Bezug auf den Kasten (171) beweglich ist und einen Manövrierabschnitt (176) außerhalb des Kastens (171) und einen Druckabschnitt (177) innerhalb des Kastens umfasst, die miteinander einstückig sind,
wobei der Kasten (171) einen Sitz (184) umschließt, der konfiguriert ist, um den Eingriffsabschnitt (81) der Einwegkapsel (80, 90) an sich zu befestigen,
wobei der Kasten (171) konfiguriert ist, um die Einwegkapsel (80, 90) schwenkbar um eine Drehachse (28) aufzunehmen, so dass durch Verschieben des Druckabschnitts (177) gegen eine Druckfläche (13") der Einwegkapsel (80,90) sich die Einwegkapsel um ihre Drehachse dreht, wobei sie sich bewegt:
- von einer geschlossenen Position, in der die Kammer (89) durch den Verschlussabschnitt (86") der Dichtungsmembran (86) abgedichtet ist,
- zu einer offenen Position, in der die Kammer (89) durch die Öffnung (87) an einem Teil des Randes (84), der nun frei von der Dichtungsmembran (86) ist, nach außen offen ist.

6. System nach Anspruch 5, wobei die Vorrichtung (180) einen Träger (185) umfasst, der konfiguriert ist, um die Einwegkapsel (80) aufzunehmen, wobei der Träger in dem Kasten (171) der Vorrichtung (190) schwenkbar um die Drehachse (168) untergebracht ist.

7. System nach Anspruch 5, wobei die Einwegkapsel (90) und die Vorrichtung (190) eine Einrichtung zum gegenseitigen Eingriff umfassen, die drehbar um die Drehachse (168) angeordnet ist.

8. System nach Anspruch 7, wobei die Einrichtung zum gegenseitigen drehbaren Eingriff ein paar Stifte (98) und ein paar entsprechende Gehäuse für die Stifte (98) umfasst, wobei die Stifte und die Gehäuse einstückig mit der Einwegkapsel (90) bzw. dem Kasten (171) der Vorrichtung (190), oder umgekehrt, sind.

9. System nach Anspruch 5, wobei das Stellglied (175) ein drehbares Stellglied ist, das drehbar um eine weitere Drehachse (168) angeordnet ist.

10. Verwendung eines Systems nach Anspruch 5 in einer bestehenden Vorrichtung zur Herstellung von türkischem Kaffee (3).

## Revendications

1. Capsule jetable (80, 90) contenant de la poudre de café (1), conçue pour être utilisée en vue de la préparation du café turc (3) dans un dispositif (180) destiné à délivrer ledit café turc (3), ladite capsule jetable comprenant :
- une partie cuvette (83, 93) définissant une chambre (89) contenant ladite poudre de café (1), ladite partie cuvette (83, 93) possédant une bouche (87) et un bord (84) autour de ladite bouche (87) ;
- une partie mise en prise (81) faisant saillie à partir d'un côté dudit bord et étant conçue pour être raccordée de manière fixe dans un siège (184) d'un logement (100) dudit dispositif (180) ;
ladite partie cuvette (83, 93) étant conçue pour se mettre en prise de manière pivotante par rapport au logement (100) autour d'un axe de rotation (28),
ladite capsule (80, 90) comprenant une membrane d'étanchéité (86) possédant :
- une partie de retenue (86') collée sur ladite partie de mise en prise (81) adjacente à un côté dudit bord (84), et
- une partie fermeture (86") collée en permanence sur ledit bord (84), de façon à sceller ladite chambre de ladite partie cuvette (83, 93) ; et ladite capsule (80, 90) étant **caractérisée en ce que** ladite partie cuvette (83, 93) possède une surface de poussée (13") exposée à l'extérieur dudit logement (100), d'une façon telle qu'une force exercée sur ladite partie cuvette (83, 93) à travers ladite surface de celle-ci (13") entraîne une rotation de ladite partie cuvette (83, 93) par rapport au logement (100) et **en ce que** ladite partie de mise en prise (81) est reliée à un côté dudit bord (84) par une partie de joint affaiblie (82), qui est conçue d'une façon telle que ladite rotation entraîne la rupture de ladite partie de joint affaiblie (82) et la séparation de ladite partie cuvette (83) de ladite partie de mise en prise (81), et par conséquent, amène ladite partie de retenue (86 ') et ladite partie de mise en prise (81) à s'éloigner ensemble et ladite partie fermeture (86") à se détacher de ladite bouche (87) de ladite partie cuvette (83, 93), tandis que ladite partie cuvette (83, 93) se déplace :
- à partir d'une position fermée (80, 90), dans laquelle ladite chambre (89) est scellée par ladite partie fermeture (86") de ladite membrane d'étanchéité (86),
- vers une position ouverte (80, 90), dans laquelle ladite chambre (89) est ouverte vers l'extérieur à travers ladite bouche (87) au niveau d'une partie dudit bord (84) maintenant libre de ladite membrane d'étanchéité (86).

2. Capsule jetable (90) selon la revendication 1, ladite partie cuvette comprenant un moyen de mise en prise rotatif (98) destiné à se mettre en prise de manière rotative avec ledit logement (100).

3. Capsule jetable (90) selon la revendication 1, ladite partie cuvette étant réalisée au moyen du moulage par injection d'une matière plastique.

4. Capsule jetable (80) selon la revendication 1, ladite partie cuvette étant réalisée par thermoformage d'une matière plastique, et ladite partie de mise en prise (81) comprenant une couche de rigidification (88) collée à l'opposé de ladite partie de retenue de ladite membrane d'étanchéité (86).

5. Système destiné à la préparation de café turc (3), comprenant :
- une capsule jetable (80, 90) comprenant :
- une partie cuvette (83, 93) définissant une chambre (89) contenant ladite poudre de café (1), ladite partie cuvette (83, 93) possédant une bouche (87) et un bord (84) autour de ladite bouche (87),
- une partie de mise en prise (81) faisant saillie à partir d'un côté dudit bord ;
- une membrane d'étanchéité (86) possédant :
- une partie de retenue (86') collée sur ladite partie de mise en prise (81) adjacente à un côté dudit bord (84), et
- une partie fermeture (86") collée en permanence sur ledit bord (84), de manière à sceller ladite chambre de ladite partie cuvette (83, 93) ;
ladite partie de mise en prise (81) étant reliée à un côté dudit bord (84) à travers une partie de joint affaiblie (82),
- un dispositif (180, 190) destiné à ouvrir ladite capsule jetable (80, 90), afin d'entraîner la libération de ladite poudre de café, ledit système (3) étant **caractérisé en ce que** ledit dispositif (180, 190) comprend :
- une boîte (171) possédant une ouverture de décharge (173) pour ladite poudre de café (1) ;
- un actionneur (175) mobile par rapport à ladite boîte (171) et comprenant une partie de manœuvre (176) à l'extérieur de ladite boîte (171) et une partie de poussée (177) à l'intérieur de ladite boîte, solidaires l'une de l'autre,
ladite boîte (171) renfermant un siège (184) conçu pour fixer sur elle-même ladite partie de mise en prise (81) de ladite capsule jetable (80, 90),
ladite boîte (171) étant conçue pour recevoir de manière pivotante ladite capsule jetable (80, 90) autour d'un axe de rotation (28), de sorte qu'en déplaçant ladite partie de poussée (177) contre une surface de poussée (13") de ladite capsule jetable (80, 90), ladite capsule jetable tourne autour de son axe de rotation se déplaçant :
- à partir d'une position fermée, dans laquelle ladite chambre (89) est scellée par ladite partie fermeture (86") de ladite membrane d'étanchéité (86),
- vers une position ouverte, dans laquelle ladite chambre (89) est ouverte vers l'extérieur à travers ladite bouche (87) au niveau d'une partie dudit bord (84) maintenant libre de ladite membrane d'étanchéité (86).

6. Système selon la revendication 5, ledit dispositif (180) comprenant un support (185) conçu pour recevoir ladite capsule jetable (80), ledit support étant logé de façon pivotante dans ladite boîte (171) dudit dispositif (190) autour de l'axe de rotation (168).

7. Système selon la revendication 5, ladite capsule jetable (90) et ledit dispositif (190) comprenant un moyen de mise en prise mutuel qui est agencé de manière à pouvoir tourner autour de l'axe de rotation (168).

8. Système selon la revendication 7, ledit moyens de mise en prise rotatif mutuel comprenant une paire de broches (98) et une paire de boîtiers respectifs pour lesdites broches (98), lesdites broches et lesdits boîtiers étant solidaires de ladite capsule jetable (90) et de ladite boîte (171) dudit dispositif (190), respectivement, ou vice-versa.

9. Système selon la revendication 5, ledit actionneur (175) étant un actionneur rotatif agencé de manière à pouvoir tourner autour d'un axe de rotation (168) supplémentaire.

10. Utilisation d'un système selon la revendication 5 dans un appareil existant destiné à la préparation du café turc (3).
